# EUROPÄISCHE PATENTSCHRIFT

(11) **EP 0 638 980 B1**
(45) Veröffentlichungstag und Bekanntmachung des Hinweises auf die Patenterteilung: **23.10.1996**
(21) Anmeldenummer: 94112366.3
(22) Anmeldetag: 08.08.1994
(51) Int. Cl.: H02K 7/08, H02K 7/116

(54) **Antriebsaggregat**
Drive assembly
Ensemble d'entraînement

(30) Priorität: 11.08.1993 DE 9311996 U
(43) Veröffentlichungstag der Anmeldung: 15.02.1995
(73) Patentinhaber: SIEMENS AKTIENGESELLSCHAFT, 80333 München (DE)
(72) Erfinder: Pfannschmidt, Bernd, Dipl.-Ing.(FH), D-90574 Rosstal (DE)

(56) Entgegenhaltungen:
- EP-A- 0 084 184
- DE-U- 9 115 647
- US-A- 4 318 573

## Beschreibung

Die Erfindung betrifft ein Antriebsaggregat.

Ein derartiges Antriebsaggregat mit einem Antriebsmotor und einem Getriebegehäuse ist durch das DE-U-91 15 647 bekannt. Im bekannten Fall ist das Getriebegehäuse über eine Trennfuge, die seitlich zum Umfang des Ritzels liegt, mit dem Lagerschild verbunden. Aufgrund der konstruktiven Anordnung der Trennfuge ist der Ausbauweg in Fahrzeug-Querrichtung für den Motor bzw. das Getriebe relativ lang. Um eine Demontage von Motor und Getriebe im Fahrzeug zu ermöglichen, ist bei der Konstruktion des Drehgestells ein entsprechend großer Freiraum vorzusehen. Falls kein entsprechend großer Freiraum vorgesehen werden kann, ist eine getrennte Demontage von Motor bzw. Getriebe im Fahrzeug nicht möglich. Der Ausbau von Motor oder Getriebe ist damit entsprechend aufwendiger.

Aufgabe der vorliegenden Erfindung ist es, ein Antriebsaggregat der eingangs genannten Art zu schaffen, das einen einfachen Ausbau des Motors oder des Getriebes ermöglicht, ohne hierfür einen großen Freiraum im Drehgestell vorzusehen.

Die Aufgabe wird erfindungsgemäß durch die Merkmale des Anspruches 1 gelöst. Vorteilhafte Ausgestaltungen der Erfindung sind in den Unteransprüchen beschrieben.

Bei dem erfindungsgemäßen Antriebsaggregat nach Anspruch 1 wird im Betriebszustand die Zentrierung der Motorwelle von der Lagerung übernommen. Die Lagerung des abtriebsseitigen Endes der Motorwelle erfolgt im Getriebegehäuse, das am abtriebsseitigen Motorschild befestigt ist. Die Lagerung für das bürstenseitige Ende der Motorwelle ist im bürstenseitigen Motorschild angeordnet.

Im Montagezustand wird bei dem Antriebsaggregat gemäß Anspruch 1 die Zentrierung der Motorwelle von den Gleitflächen auf dem abtriebsseitigen und dem bürstenseitigen Teil der Motorwelle bzw. von den Gleitflächen eines in diesem Bereich auf der Motorwelle befestigten Zentrierbundes sowie von den Zentrierbohrungen in den Motorschilden übernommen.

Aufgrund der erfindungsgemäßen Konstruktion ist der erforderliche Verschiebeweg für die axiale Verschiebung der Motorwelle aus dem Betriebszustand heraus in den Montagezustand sehr gering. Die Motorwelle muß nur soweit in Richtung auf das bürstenseitige Motorschild verschoben werden, daß die äußerste Kante des abtriebsseitigen Endes der Motorwelle axial hinter der inneren Kante des Lagerkopfes im Getriebegehäuse liegt. Dadurch ist für Motor bzw. Getriebe kein Ausbauweg in Fahrzeug-Querrichtung erforderlich, so daß auch bei Drehgestellen mit relativ kleinen Freiräumen eine Demontage von Motor bzw. Getriebe bei nicht aus dem Fahrzeug ausgebautem Antriebsaggregat möglich ist.

Weitere Vorteile und Einzelheiten der Erfindung ergeben sich aus der nachfolgenden Beschreibung eines Ausführungsbeispiels anhand der Zeichnung und in Verbindung mit den Unteransprüchen. Es zeigen:
- FIG 1: in einem Teil-Längsschnitt ein Antriebsaggregat im Betriebszustand,
- FIG 2: in einem Teil-Längsschnitt ein Antriebsaggregat im Montagezustand,

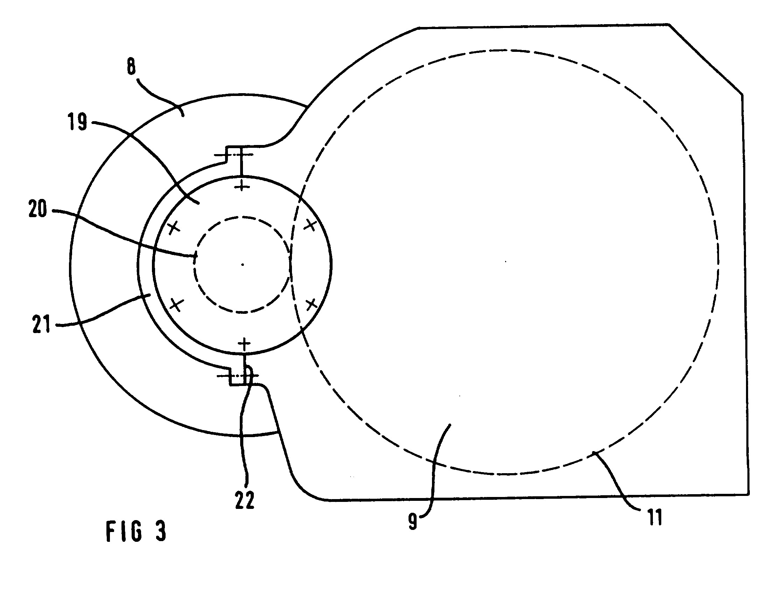

- FIG 3: eine Stirnansicht des Antriebsaggregates gemäß FIG 1.

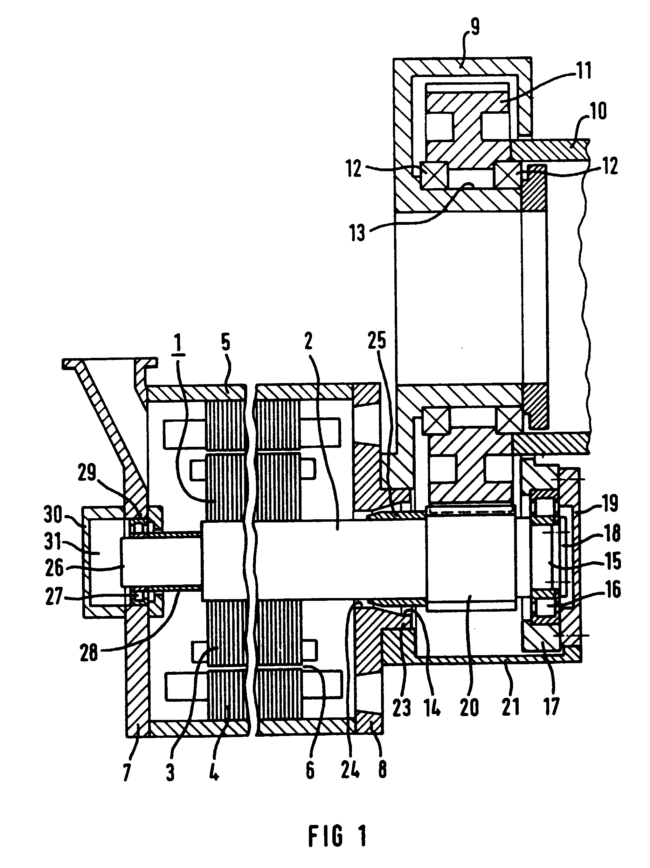

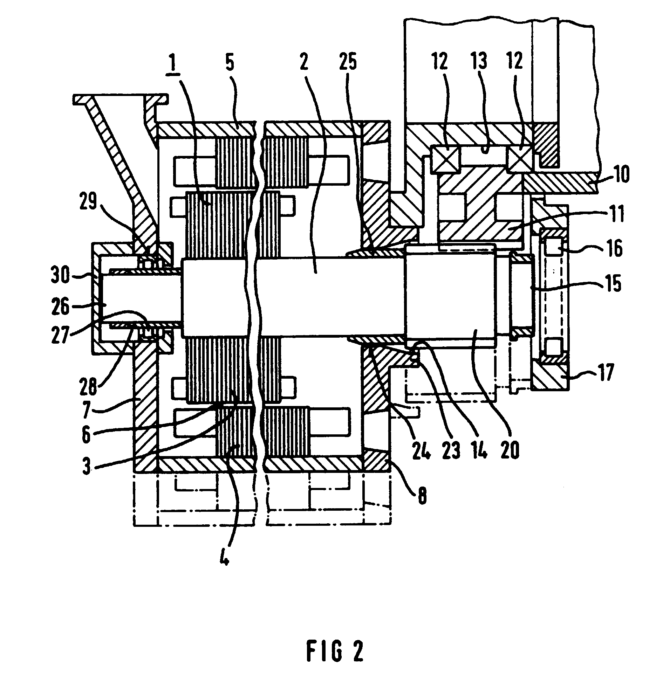

In den FIG 1 und 2 ist mit 1 der Läufer eines elektrischen Antriebsmotors bezeichnet, der eine Motorwelle 2 und ein auf dieser angeordnetes Läuferblechpaket 3 aufweist. Ein Ständerblechpaket 4, das im Motorgehäuse 5 befestigt ist, umgibt den Läufer 1 unter Belassung eines Luftspaltes 6.

Das Motorgehäuse 5 ist beidseitig von jeweils einem Motorschild 7 bzw.8 begrenzt. Zur Unterscheidung zwischen beiden Motorschilden 7 und 8 wird für das dem abtriebsseitigen Motorschild 8 gegenüberliegende Motorschild 7 der an sich nur bei Gleichstrommotoren übliche Zusatz "bürstenseitig" verwendet.

An dem abtriebsseitigen Motorschild 8 ist ein Getriebegehäuse 9 befestigt, das zur Lagerung eines mit einer Hohlwelle 10 verdrehfest verbundenen Großrades 11 ausgebildet ist. Das Großrad 11 ist hierzu mittels Walzlager 12 im Lagersitz 13 des Getriebegehäuses 9 gelagert.

Das abtriebsseitige Motorschild 8 weist eine Bohrung 14 auf, durch die die Motorwelle 2 soweit in das Getriebegehäuse 9 hineinragt, daß sie mit ihrem abtriebsseitigen Ende 15 mittels eines Zylinderrollenlagers 16 im Getriebegehäuse 9 gelagert ist. Das Zylinderrollenlager 16 ist hierbei im Lagerkopf 17 des Getriebegehäuses 9 angeordnet. Der Lagerkopf ist durch einen inneren Lagerdeckel 18 und einen äußeren Lagerdeckel 19 nach außen hin abgeschlossen.

Auf dem abtriebsseitigen Ende 15 der Motorwelle 2 ist ein Ritzel 20, das in Eingriff mit dem Großrad 11 geht, aufgeschrumpft.

Das Getriebegehäuse 9 ist im Bereich des Ritzels 20 von einem Getriebegehäusedeckel 21 abgedeckt, der das Ritzel 20 in Umfangsrichtung bis zur Achse der Motorwelle 2 umschließt. Die Trennfuge 22 zwischen Getriebegehäusedeckel 21 und Getriebegehäuse 9 verläuft also durch die Achse des Ritzels 20.
Das abtriebsseitige Motorschild 8 weist einen um die Bohrung 14 umlaufenden Zentrierkragen 23 auf. Die Öffnung der Bohrung 14 ist gegenüber der axial weiter innen liegenden Zentrierbohrung 24 aufgeweitet.

Auf dem abtriebsseitigen Teil der Motorwelle 2 ist ein Zentrierbund 25 angeordnet, der ebenso wie die Zentrierbohrung 24 einen Schlupfkegel aufweist.

Das bürstenseitige Ende 26 der Motorwelle 2 ist über ein Zylinderrollenlager 27 im bürstenseitigen Motorschild 7 gelagert. Der bürstenseitige Teil der Motorwelle 2 weist eine Gleitfläche auf, die im dargestellten Ausführungsbeispiel von einem Gleitring 28, der die Motorwelle 2 an ihrem bürstenseitigen Teil umschließt, gebildet wird. Der Außendurchmesser des Gleitringes 28 entspricht dem Außendurchmesser des Innenrings des Zylinderrollenlagers 27 im bürstenseitigen Motorschild 7. Die axiale Länge des Gleitringes 28 entspricht dem erforderlichen Verschiebeweg der Motorwelle 2 in Richtung des bürstenseitigen Lagerschildes 7.

Das bürstenseitige Motorschild 7 weist ebenfalls eine Bohrung 29 auf, die als Lagersitz für das Zylinderrollenlager 27 dient und die von einem Lagerdeckel 30 derart abgedeckt ist, daß zwischen dem bürstenseitigen Ende 26 der Motorwelle 2 und der Innenseite des Lagerdeckels 30 ein Freiraum 31 verbleibt, der dem erforderlichen Verschiebeweg der Motorwelle 2 in Richtung bürstenseitiges Motorschild 7 entspricht.

In FIG 1 ist das Antriebsaggregat im Betriebszustand dargestellt. Um das Antriebsaggregat zu demontieren, müssen zunächst der äußere Lagerdeckel 19 und der innere Lagerdeckel 18 vom Getriebegehäuse 9 abgeschraubt werden. Anschließend muß der Getriebegehäusedeckel 21 vom Getriebegehäuse 9 entfernt werden. Um das Antriebsaggregat in seinen Montagezustand zu bringen, muß nunmehr nur noch die Motorwelle 2 so weit in Richtung auf das bürstenseitige Motorschild 7 verschoben werden, bis die äußerste Kante des abtriebsseitigen Endes 15 der Motorwelle 2 axial hinter der inneren Kante des Lagerkopfes 17 im Getriebegehäuse 9 liegt. Dadurch ist für Motor bzw. Getriebe kein Ausbauweg in Fahrzeugquerrichtung erforderlich, so daß auch bei Drehgestellen mit relativ kleinen Freiräumen eine Demontage von Motor und Getriebe bei nicht aus dem Fahrzeug ausgebautem Antriebsaggregat möglich ist.

Wie aus FIG 1 und 2 ersichtlich ist, wird die Zentrierung der Motorwelle 2 im Betriebszustand von dem Zylinderrollenlager 16 im Getriebegehäuse 9 sowie von dem Zylinderrollenlager 27 im bürstenseitigen Motorschild 7 übernommen, wohingegen im Montagezustand die Zentrierung der Motorwelle 2 von den Gleitflächen in der Zentrierbohrung 24 sowie auf dem Zentrierbund 25 bzw. von den Wälzkörpern des Zylinderrollenlagers 27 und der Gleitfläche des Gleitringes 28 übernommen wird.

## Patentansprüche

1. Antriebsaggregat mit einem Antriebsmotor, dessen Motorwelle (2) mit ihrem abtriebsseitigen Ende (15) zusammen mit einem Getriebe (11,20) in einem am abtriebsseitigen Motorschild (8) befestigten Getriebegehäuse (9) gelagert ist, wobei das abtriebsseitige Motorschild (8) eine Bohrung (14) aufweist, die in eine axial weiter innen liegende, gegenüber der Bohrungsöffnung kleinere Zentrierbohrung (24) übergeht, die im Montagezustand, bei in Richtung eines bürstenseitigen Motorschildes (7) axial verschobener Motorwelle (2), die Lagerung des abtriebsseitigen Teils der Motorwelle (2), der einen Zentrierbund (25) aufweist, übernimmt, wobei die Zentrierbohrung (24) im abtriebsseitigen Motorschild (8) und/oder der Zentrierbund (25) auf dem abtriebsseitigen Teil der Motorwelle (2) einen Schlupfkegel aufweisen, und wobei die Motorwelle (2) mit ihrem bürstenseitigen Ende (26) im bürstenseitigen Motorschild (7) gelagert ist und der bürstenseitige Teil der Motorwelle (2) eine Gleitfläche (28) aufweist, die im Montagezustand die Lagerung des bürstenseitigen Teils der Motorwelle (2) übernimmt.

2. Antriebsaggregat nach Anspruch 1,
**dadurch gekennzeichnet**,
daß am Getriebegehäuse (9) ein Lagerkopf (17) angeformt ist, in den die Lagerung (16) des abtriebsseitigen Endes (15) der Motorwelle (2) angeordnet ist.

3. Antriebsaggregat nach Anspruch 1,
**dadurch gekennzeichnet**,
daß die Bohrung (14) einen umlaufenden Zentrierkragen (23) aufweist, wobei die Öffnung der Bohrung (14) gegenüber der axial weiter innenliegenden Zentrierbohrung (24) aufgeweitet ist.

4. Antriebsaggregat nach Anspruch 1,
**dadurch gekennzeichnet**,
daß die Gleitfläche an dem bürstenseitigen Teil der Motorwelle (2) von einem die Motorwelle (2) umschließenden Gleitring (28) gebildet wird.

5. Antriebsaggregat nach einem der Ansprüche 1 bis 4,
**dadurch gekennzeichnet**,
daß das Getriebegehäuse (9) im Bereich des Ritzels (20) von einem Getriebegehäusedeckel (21) abgedeckt ist.

## Claims

1. Drive assembly having a driving motor whose motor shaft (2) is supported at the end (15) on the drive side together with gearing (11, 20) in a gearbox (9) secured to the motor end cover (8) on the drive side, wherein the motor end cover (8) on the drive side has a bore hole (14) that changes into a centre hole (24) which is smaller in relation to the aperture of the bore hole and is located axially further inwards and which, in the installation state, with the motor shaft (2) displaced axially in the direction of a motor end cover (7) on the brush side, ensures the seating of the part of the motor shaft (2) on the drive side which has a centring band (25), wherein the centre hole (24) in the motor end cover (8) on the drive side and/or the centring band (25) on the part of the motor shaft (2) on the drive side have a slip taper, and wherein the motor shaft (2) is supported at the end (26) on the brush side in the motor end cover (7) on the brush side, and the part of the motor shaft (2) on the brush side has a sliding surface (28) which, in the installation state, ensures the seating of the part of the motor shaft (2) on the brush side.

2. Drive assembly according to claim 1, **characterised in that** a bearing head (17), in which there is arranged the seating (16) of the end (15) of the motor shaft (2) on the drive side, is preformed on the gearbox (9).

3. Drive assembly according to claim 1, **characterised in that** the bore hole (14) has a circumferential centring collar (23), wherein the aperture of the bore hole (14) is opened out in relation to the centre hole (24) located axially further inwards.

4. Drive assembly according to claim 1, **characterised in that** the sliding surface on the part of the motor shaft (2) on the brush side is formed by a slip ring (28) surrounding the motor shaft (2).

5. Drive assembly according to one of claims 1 to 4, **characterised in that** the gearbox (9) is covered by a gearbox cover (21) in the region of the pinion (20).

## Revendications

1. Groupe de transmission comportant un moteur d'entraînement, dont l'arbre (2) est monté par son extrémité (15) située du côté sortie conjointement avec une transmission (11, 20) dans un carter (9) de transmission, qui est fixé au flasque (8) du moteur situé du côté sortie, le flasque (8) du moteur situé du côté sortie comportant un perçage (14) se prolongeant par un perçage de centrage (24) plus petit situé suivant l'axe plus à l'intérieur et en vis-à-vis de l'ouverture de perçage, qui à l'état de montage, lorsque l'arbre (2) du moteur est décalé suivant l'axe en direction d'un flasque (7) du moteur situé du côté des balais, assure le logement de la partie de l'arbre (2) du moteur située du côté sortie comportant une collet de centrage (25), le perçage de centrage (24) dans le flasque (8) du moteur situé du côté sortie et/ou le collet de centrage (25) sur la partie de l'arbre (2) du moteur située du côté sortie comportant un cône de glissement, l'arbre (2) du moteur étant monté par son extrémité (26) située du côté des balais dans le flasque (7) du moteur situé du côté des balais, et la partie de l'arbre (2) du moteur située du côté des balais comportant une surface de glissement (28) qui, à l'état de montage, assure le logement de la partie de l'arbre (2) du moteur située du côté des balais.

2. Groupe de transmission selon la revendication 1,
caractérisé par le fait que,
une tête (17) de palier, dans laquelle est disposé le roulement (16) de l'extrémité (15) de l'arbre (2) du moteur située du côté sortie, est issue du carter (9) de transmission.

3. Groupe de transmission selon la revendication 1,
caractérisé par le fait que,
le perçage (14) comporte une collerette de centrage (23) circonférentielle, l'ouverture du perçage (14) étant élargie par rapport au perçage de centrage (24) situé axialement plus à l'intérieur.

4. Groupe de transmission selon la revendication 1,
caractérisé par le fait que,
la surface de glissement de la partie de l'arbre (2) du moteur située du côté des balais est constituée d'une bague de glissement (28) qui enserre l'arbre (2) du moteur.

5. Groupe de transmission selon l'une des revendications 1 à 4,
caractérisé par le fait que,
à proximité du pignon (20), le carter (9) de transmission est recouvert d'un couvercle (21).
